# EUROPEAN PATENT APPLICATION

(11) **EP 4 691 999 A1**
(43) Date of publication of application: **11.02.2026**
(21) Application number: 25194056.5
(22) Date of filing: 05.08.2025
(51) Int. Cl.: C01G 53/40, C01G 53/50, H01M 4/505, H01M 4/525

(54) **PRECURSOR OF POSITIVE ELECTRODE ACTIVE MATERIAL, POSITIVE ELECTRODE ACTIVE MATERIAL, AND METHOD FOR PREPARING POSITIVE ELECTRODE ACTIVE MATERIAL**

(30) Priority: 06.08.2024 KR 20240104823; 01.08.2025 KR 20250106126
(71) Applicant: SAMSUNG SDI CO., LTD., Yongin-si, Gyeonggi-do 17084 (KR)
(72) Inventor: SEONG, Wonmo, 17084 Yongin-si (KR); HASE, Naoyuki, 17084 Yongin-si (KR); HA, Jihoon, 17084 Yongin-si (KR)
(74) Representative: Marks & Clerk LLP

(57) **Abstract**

A method for preparing a positive electrode active material, including the steps of: preparing a nickel-manganese-based oxide precursor by subjecting a nickel-manganese-based hydroxide, having a manganese content of about 34 mol% to about 50 mol% based on 100 mol% of a total metal, to a first heat-treatment at a temperature of less than or equal to about 500 °C; mixing the nickel-manganese-based oxide precursor and a lithium raw material to form a mixture at a molar ratio of lithium of the lithium raw material to the total metal of the nickel-manganese-based oxide precursor of greater than about 1 and less than about 2; and subjecting the mixture to a second heat-treatment. Also disclosed is a method for preparing a precursor of a positive electrode active material including a lithium nickel-manganese-based composite oxide, and a lithium-manganese-rich positive electrode active material.

## Description

### BACKGROUND

### Field

The present invention relates to a precursor of a positive electrode active material, a positive electrode active material, a method for preparing a positive electrode active material, and a rechargeable lithium battery.

### Description of the Related Art

Lithium-manganese-rich (LMR) materials, as positive electrode active materials for rechargeable lithium batteries, generally refer to layered positive electrode active materials with an excess of lithium and a relatively high manganese content. Transition metals have been known in the art to exhibit a certain level of energy capacity via oxidation-reduction; however, it has only recently been known that transition metals can exhibit an improved level of energy capacity via oxygen-based oxidation-reduction (O-redox). LMR materials, due to their relatively high content of manganese, have been an ultra-low-cost next-generation positive electrode active material due to their capability to undergo O-redox.

However, because LMR materials have a relatively low content of LiNiO₂ and a relatively high content of LiMnO₂ and/or Li₂MnO₃, the theoretical energy density of LMR materials is generally less than that of existing nickel-based positive electrode active materials. Even if high energy capacity (i.e., energy capacity per weight) can be achieved by utilizing LMR materials, capacity per volume, i.e., energy density, can be reduced.

### SUMMARY

The present invention provides a method for maximizing energy density by increasing energy capacity per volume while maintaining the high-capacity effect of a lithium-manganese-rich positive electrode active material. The present invention also provides a positive electrode active material precursor and a method for preparing the positive electrode active material, and the positive electrode active material.

According to a first aspect of the present invention there is provided a method for preparing a positive electrode active material including: subjecting a nickel-manganese-based hydroxide having a manganese content of about 34 mol% to about 50 mol% based on 100 mol% of a total metal to a first heat-treatment at a temperature of less than or equal to about 500 °C to prepare a nickel-manganese-based oxide precursor; and mixing the nickel-manganese-based oxide and a lithium raw material such that a molar ratio of lithium of the lithium raw material to the total metal of the nickel-manganese-based oxide is greater than 1 and less than or equal to 2, and performing a second heat-treatment, to obtain a lithium-manganese-rich positive electrode active material including a lithium nickel-manganese-based composite oxide.

In particular, the first aspect of the present invention provides a method for preparing a positive electrode active material including a lithium nickel-manganese-based composite oxide, the method including: preparing a nickel-manganese-based oxide precursor by subjecting a nickel-manganese-based hydroxide, having a manganese content of about 34 mol% to about 50 mol% based on 100 mol% of a total metal, to a first heat-treatment at a temperature of less than or equal to about 500 °C; mixing the nickel-manganese-based oxide precursor and a lithium raw material to form a mixture at a molar ratio of lithium of the lithium raw material to the total metal of the nickel-manganese-based oxide precursor being greater than about 1 and less than or equal to about 2; and subjecting the mixture to a second heat-treatment.

According to a second aspect of the present invention there is provided a positive electrode active material precursor, which includes a nickel-manganese-based oxide having a manganese content of about 34 mol% to about 50 mol% based on 100 mol% of a total metal, and which has a peak full width at half maximum (FWHM) of about 0.5 to about 3, for example about 1 to about 3, in a (012) crystal plane of a R-3 space group as determined by X-ray diffraction analysis.

According to a third aspect of the present invention there is provided a lithium-manganese-rich positive electrode active material, which includes a lithium nickel-manganese-based composite oxide having a manganese content of about 34 mol% to about 50 mol% based on 100 mol% of a total metal excluding lithium, wherein a ratio of a peak intensity of a (003) crystal plane to a peak intensity of a (104) crystal plane of a R-3m space group in X-ray diffraction analysis is about 0.86 to about 1.1, for example about 0.86 to about 1.04.

In some embodiments, the first heat-treatment may be performed at a temperature of from about 400 °C to about 500 °C for about 1 to about 10 hours.

In some embodiments, the molar ratio may be from about 1.06 to about 2.

In some embodiments, the molar ratio may be from about 1.1 to about 1.3.

In some embodiments, the lithium raw material may include lithium hydroxide.

In some embodiments, the second heat-treatment may be performed at a temperature of equal to or greater than about 950 °C.

In some embodiments, a BET (Brunauer-Emmett-Teller) specific surface area of the nickel-manganese-based oxide precursor may be greater than a BET specific surface area of the nickel-manganese-based hydroxide.

In some embodiments, the BET specific surface area of the nickel-manganese-based hydroxide may be less than about 10 m²/g, and wherein the BET specific surface area of the nickel-manganese-based oxide may be greater than or equal to about 10 m²/g.

In some embodiments, the nickel-manganese-based oxide precursor may have a peak full width at half maximum (FWHM) of about 0.5 to about 3, for example about 1 to about 3, in a (012) crystal plane of a R-3 space group, a peak full width at half maximum (FWHM) of about 0.5 to about 3, for example about 1 to about 3, in a (104) crystal plane of a R-3 space group, and a peak full width at half maximum (FWHM) of about 0.5 to about 2, for example about 1 to about 2, at a (024) crystal plane of a R-3 space group based on an X-ray diffraction spectrum.

In some embodiments, the positive electrode active material may have an average particle diameter (D₅₀) of about 2 µm to about 18 µm, a pellet density of equal to or greater than about 2.7 g/cc, for example equal to or greater than about 2.85 g/cc, and an energy capacity per volume of equal to or greater than about 520 mAh/cc, for example equal to or greater than 554 mAh/cc.

As noted above, the second aspect of the present invention provides a positive electrode active material precursor, including: a nickel-manganese-based oxide having a manganese content of about 34 mol% to about 50 mol% based on 100 mol% of a total metal, wherein a peak full width at half maximum (FWHM) at a (012) crystal plane of a R-3 space group based on an X-ray diffraction spectrum is about 0.5 to about 3, for example about 1 to about 3.

In some embodiments, the positive electrode active material precursor may have a peak full width at half maximum (FWHM) of about 0.5 to about 3, for example about 1 to about 3, at a (104) crystal plane of the R-3 space group and a peak full width at half maximum (FWHM) of about 0.5 to about 2, for example about 1 to about 2, at a (024) crystal plane of the R-3 space group based on the X-ray diffraction spectrum.

In some embodiments, the positive electrode active material precursor may have a BET specific surface area of about 10 m²/g to about 50 m²/g and an average particle diameter (D₅₀) of about 2 µm to about 18 µm.

As noted above, the third aspect of the present invention provides a lithium-manganese-rich positive electrode active material, including: a lithium nickel-manganese-based composite oxide having a manganese content of about 34 mol% to about 50 mol% based on 100 mol% of a total metal excluding lithium, wherein a ratio of a peak intensity of a (003) crystal plane to a peak intensity of a (104) crystal plane of a R-3m space group based on an X-ray diffraction spectrum is about 0.86 to about 1.1, for example about 0.886 to about 1.04.

In some embodiments, the positive electrode active material may have a peak full width at half maximum (FWHM) of the (104) crystal plane of the R-3m space group of about 0.310 to about 0.340, for example about 0.310 to about 0.330, and a peak full width at half maximum (FWHM) of the (003) crystal plane of the R-3m space group of about 0.150 to about 0.165, for example about 0.150 to about 0.158, based on the X-ray diffraction spectrum.

In some embodiments, the positive electrode active material may have a ratio of an c-axis lattice constant to an a-axis lattice constant of about 4.951 to about 4.953 based on the X-ray diffraction spectrum.

In some embodiments, an average particle diameter (D₅₀) may be about 2 µm to about 18 µm.

In some embodiments, a pellet density may be equal to or greater than about 2.7 g/cc, for example equal to or greater than about 2.85 g/cc, and wherein a energy capacity per volume may be equal to or greater than about 520 mAh/cc, for example equal to or greater than about 554 mAh/cc.

In some embodiments, the positive electrode active material may exhibit energy capacity via a transition metal-based oxidation-reduction reaction and an oxygen-based oxidation-reduction reaction.

In some embodiments, the lithium-manganese-rich positive electrode active material may be represented by Chemical Formula 1:

**[Chemical Formula 1]** a[Li₁₊ₓ(Ni_{y}Mn_{z}M¹_{1-y-z})₁₋ₓO₂] + (1-a)[b(LiNiⱼMnₖM¹₁₋ⱼ₋ₖO₂) + c(Li₂Mn_{w}M¹_{1-w}O₃)]

wherein, in Chemical Formula 1, 0≤a≤1, 0.03≤x≤0.2, 0.50≤y≤0.66, 0.34≤z≤0.50, 0<b<1, 0<c<1, 0.5≤j≤1.0, 0.5≤k≤1.0, 0.9≤w≤1.0, and M¹ may be one or more elements selected from Al, B, Ba, Ca, Ce, Co, Cr, Cu, Fe, Mg, Mo, Nb, Si, Sn, Sr, Ti, V, W, Y, Zn, and Zr. For example, Chemical Formula 1 may be: a[Li₁₊ₓ(Ni_{y}Mn_{1-y})₁₋ₓO₂] + (1-a)[b(LiNi_{z}Mn_{1-z}O₂)+ c(Li₂MnO₃)] in which 0≤a≤ 1, 0.03≤x≤0.2, 0.50≤y≤0.66, 0<b<1, 0<c<1, and 0.5≤z≤1.0.

The lithium-manganese-rich positive electrode active material may have improved energy capacity and improved weight to volume density, thereby maximizing energy capacity per volume and energy density.

At least some of the above and other features of the invention are set out in the claims

### BRIEF DESCRIPTION OF THE DRAWINGS

The drawings illustrate embodiments of the present disclosure, and further describe aspects and features of the present disclosure along with the detailed description of the present disclosure. Thus, the present disclosure should not be construed as being limited to the drawings.
FIG. 1 is a view schematically showing a rechargeable lithium battery according to embodiments of the present disclosure.
FIG. 2 is a cross-sectional view schematically showing a rechargeable lithium battery according to embodiments of the present disclosure.
FIG. 3 is a view schematically showing a rechargeable lithium battery according to embodiments of the present disclosure.
FIG. 4 is a view schematically showing a rechargeable lithium battery according to embodiments of the present disclosure.
FIG. 5 is a scanning electron microscope (SEM) image of the hydroxide precursor of Comparative Example 1.
FIG. 6 is an SEM image of the hydroxide precursor of Comparative Example 1.
FIG. 7 is an SEM image of the oxide precursor of Example 1 according to embodiments of the present disclosure.
FIG. 8 is an SEM image of the oxide precursor of Example 1 according to embodiments of the present disclosure.
FIG. 9 is an SEM image of the oxide precursor of Example 3 according to embodiments of the present disclosure.
FIG. 10 is an SEM image of the oxide precursor of Example 3 according to embodiments of the present disclosure.
FIG. 11 is an SEM image of the oxide precursor of Comparative Example 2.
FIG. 12 is an SEM image of the oxide precursor of Comparative Example 2.
FIG. 13 is an X-ray diffraction (XRD) spectrum of the hydroxide precursor of Comparative Example 1.
FIG. 14 is an XRD spectrum of the oxide precursor of Example 1 according to embodiments of the present disclosure.
FIG. 15 is an XRD spectrum of the oxide precursor of Example 3 according to embodiments of the present disclosure.
FIG. 16 is an XRD spectrum of the oxide precursor of Comparative Example 2.

### DETAILED DESCRIPTION

Embodiments of the present invention are described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

As used herein, "combination thereof" means a mixture, a laminate, a composite, a copolymer, an alloy, a blend, a reaction product, and the like of the constituents.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a geometry formed on the whole surface when viewed from a plan view, but also a geometry formed on a partial surface.

The average particle diameter may be measured by a method well known to those skilled in the art, for example, may be measured by a particle size analyzer, or may be measured by a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or length of the major axis) of about 20 particles at random in a scanning electron microscope image.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of ± 5% or less. In addition, when a certain parameter is referred to as being uniform in a given region, it may mean that it is uniform in terms of an average.

Throughout the specification, unless otherwise stated, each element may be singular or plural.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

As used herein, the terms are for describing embodiments of the present disclosure and are not intended to limit the disclosure. As used herein, the term "metal" refers to ordinary metals, transition metals and metalloids (semi-metals).

### Method of Preparing Positive Electrode Active Material

A method for preparing a positive electrode active material includes: subjecting a nickel-manganese-based hydroxide having a manganese content of about 34 mol% to about 50 mol% based on 100 mol% of a total metal to first heat-treatment at a temperature of less than or equal to about 500 °C to prepare a nickel-manganese-based oxide, and mixing the nickel-manganese-based oxide and a lithium raw material such that a molar ratio of lithium of the lithium raw material to the total metal of the nickel-manganese-based oxide is greater than about 1 and less than or equal to about 2, and performing a second heat-treatment, to obtain a lithium-manganese-rich positive electrode active material including a lithium nickel-manganese-based composite oxide. According to the method, a lithium-manganese-rich positive electrode active material having improved energy capacity and improved weight to volume density and thus improved energy density may be provided.

In some embodiments, the method is for preparing a positive electrode active material including a lithium nickel-manganese-based composite oxide, the method including: preparing a nickel-manganese-based oxide precursor by subjecting a nickel-manganese-based hydroxide, having a manganese content of about 34 mol% to about 50 mol% based on 100 mol% of a total metal, to a first heat-treatment at a temperature of less than or equal to about 500 °C; mixing the nickel-manganese-based oxide precursor and a lithium raw material to form a mixture at a molar ratio of lithium of the lithium raw material to the total metal of the nickel-manganese-based oxide precursor being greater than about 1 and less than or equal to about 2; and subjecting the mixture to a second heat-treatment.

In general, increasing the weight to volume density of a positive electrode active material involves increasing the particle size and decreasing the pore ratio. However, for lithium-manganese-rich positive electrode active materials, it is difficult to control synthesis conditions via co-precipitation of the precursor to achieve an increased weight to volume density, compared with the precursor of nickel-rich positive electrode active materials. For example, the precursor of the lithium-manganese-rich positive electrode active material is typically prepared from either a carbonate-based raw material or a hydroxide-based raw material. When using carbonate-based raw materials, the ratio of impurities after co-precipitation is relatively low enabling efficient reaction control, resulting in efficient control of the particle size. However, a growth rate of the secondary particles is greater than that of the primary particles that make up the secondary particle, such that lowering the pore ratio is limited. When using hydroxide-based raw materials, the relatively high sphericity of the secondary particles and the relatively low pore ratio may result in an increased weight to volume density; however, reaction control for synthesizing a high-density precursor is difficult because Mn(OH)₂ easily grows in the form of needles, lamellae, or plates. Impurities can be easily generated and reproducibility is relatively low.

In some embodiments, a method for simultaneously improving energy capacity and energy density includes obtaining an oxide precursor by low-temperature firing of a hydroxide precursor, mixing the oxide precursor with a lithium raw material, and then performing a second firing to prepare a lithium-manganese-rich positive electrode active material. As used herein, the hydroxide precursor refers to a precursor of a positive electrode active material having a metal hydroxide composition, and the oxide precursor refers to a precursor of a positive electrode active material having a metal oxide composition. In a composition where the molar ratio of manganese to the total metal is less than or equal to about 50%, a hydroxide precursor is subjected to first heat-treatment at a temperature of less than or equal to about 500 °C to prepare an oxide precursor, and then mixed with a lithium raw material and subjected to a second heat-treatment, thereby improving both the energy capacity and energy density, and providing a lithium-manganese-rich positive electrode active material with improved energy capacity per volume. According to some embodiments, the oxide precursor has a significantly increased BET specific surface area compared to the hydroxide precursor, which improves the reactivity with the lithium source, and improves both the energy density and energy capacity of the lithium-manganese-rich positive electrode active material.

In a method for preparing a positive electrode active material, the nickel-manganese-based hydroxide may refer to a hydroxide precursor, and may have a manganese content of about 34 mol% to about 50 mol% based on 100 mol% of a total metal. The manganese content in the hydroxide precursor may be about 35 mol% to about 50 mol%, about 36 mol% to about 50 mol%, about 38 mol% to about 50 mol%, about 40 mol% to about 50 mol%, or about 45 mol% to about 50 mol%, and for example, may be about 35 mol%, about 40 mol%, about 45 mol%, or about 50 mol% based on 100 mol% of the total metal. The oxide precursor may have a significantly increased BET specific surface area, and a positive electrode active material may exhibit a high pellet density while implementing a high energy capacity, thereby improving the energy density. For example, when a nickel-manganese-based hydroxide, having a manganese content exceeding about 50 mol% based on the total metal, is used as a precursor, the BET specific surface area of the oxide precursor may not be improved or may minimally increase, the pellet density of the synthesized positive electrode active material may not be increased or minimally increased, and the energy capacity per weight may not be improved. As a result, the energy capacity per volume may not be improved. In some embodiments, a hydroxide precursor may have a manganese content of about 34 mol% to about 50 mol%.

The nickel-manganese-based hydroxide may be represented, for example, by Chemical Formula 11:

**[Chemical Formula 11]** Ni_{y11}Mn_{z11}M¹¹_{1-y11-z11}(OH)₂

In Chemical Formula 11, 0.5≤y11≤0.66, 0.34≤z11≤0.5, and M¹¹ may be one or more elements selected from Al, B, Ba, Ca, Ce, Co, Cr, Cu, Fe, Mg, Mo, Nb, Si, Sn, Sr, Ti, V, W, Y, Zn, or Zr.

In Chemical Formula 11, for example, 0.5≤y11≤0.6, 0.4≤z11≤0.5, or 0.5≤y11≤0.55, 0.45≤z11≤0.5.

An average particle diameter (D₅₀) of the hydroxide precursor may be, for example, about 2 µm to about 18 µm, about 3 µm to about 15 µm, about 4 µm to about 13 µm, or about 5 µm to about 12 µm. The average particle diameter may be obtained by measuring the sizes (e.g., particle diameter, major axis, or major axis length) of about 20 random particles in the SEM image of the precursor, obtaining a particle size distribution, and taking the size of the particles having a cumulative volume of 50 volume% as the average particle diameter.

The first heat-treatment temperature may be less than or equal to about 500 °C, and may be, for example, about 250 °C to about 500 °C, about 300 °C to about 500 °C, about 350 °C to about 500 °C, or about 400 °C to about 500 °C, and may be, for example, about 400 °C, about 450 °C, or about 500 °C. By performing the first heat-treatment within the above temperature range, the BET specific surface area of the oxide precursor may be significantly increased. When the first heat-treatment temperature is beyond the preferred range, for example, exceeding about 500 °C, the obtained oxide precursor has a significantly lower BET specific surface area than that that of the oxide precursor obtained by heat treatment at equal to or less than about 500 °C, and the synthesized positive electrode active material has a relatively low pellet density, and the energy capacity per volume may not be improved.

The first heat-treatment may be performed under oxygen or air for about 1 to about 10 hours, for example, about 2 to about 9 hours, or about 4 to about 8 hours, to obtain an oxide precursor having a high BET specific surface area.

A molar ratio of lithium of the lithium source material to the total metal of the nickel-manganese-based oxide precursor may be about 1.06 to about 2, for example, about 1.06 to about 1.8, about 1.06 to about 1.6, about 1.06 to about 1.5, about 1.1 to about 1.45, about 1.1 to about 1.4, about 1.1 to about 1.3, about 1.1 to about 1.2, about 1.2 to about 1.8, about 1.2 to about 1.5, or about 1.3 to about 1.45, and may be, for example, about 1.12.

The lithium raw material may include lithium hydroxide, lithium carbonate, lithium sulfate, lithium nitrate, or a combination thereof, and may include, for example, anhydrous lithium hydroxide.

When anhydrous lithium hydroxide is used as the lithium raw material, the amount of raw materials charged in the synthesis of the positive electrode active material may be increased to improve the hourly production volume, and the amount of unnecessary gas and moisture generated during heat treatment may be reduced, thereby improving processability and improving the quality of the positive electrode active material. The heat treatment yield may be increased and productivity may be improved by eliminating the input of unnecessary substances such as H₂O.

For example, anhydrous lithium hydroxide (LiOH) may be prepared by drying hydrated lithium hydroxide (LiOH · H₂O) having an average particle diameter (D₅₀) of about 400 µm to about 600 µm, then pulverizing the dried lithium hydroxide to have an average particle diameter (D₅₀) of about 3 µm to about 30 µm. The anhydrous lithium hydroxide may be prepared by not pulverizing before drying, and pulverizing once after drying. The drying may be carried out, for example, under vacuum conditions, and may be carried out at a temperature of about 50 °C to about 200 °C for about 0.5 to about 20 hours. The average particle diameter (D₅₀) of the starting material, hydrated lithium hydroxide, may be, for example, about 450 µm to about 550 µm, or about 480 µm to about 500 µm, and the average particle diameter (D₅₀) of the obtained anhydrous lithium hydroxide may be about 3 µm to about 25 µm or about 5 µm to about 20 µm.

Anhydrous lithium salt can be obtained according to this method, an optimal process condition may be maintained, and the conversion rate to Li₂CO₃ may be lowered to less than or equal to about 5%, making it possible to obtain high-purity anhydrous lithium hydroxide. After pulverizing anhydrous lithium hydroxide, the fluidity of the powder decreases rapidly, making it difficult to perform further processing after pulverizing. For example, if drying is performed after pulverizing, the heat generated during drying causes fine particles to entangle with one another and coagulate, requiring a re-pulverizing process. However, there are limitations to the re-pulverizing process because coagulation strength of the particles is relatively high. The conversion rate to Li₂CO₃ may increase as the number of processes increases. The increase in the BET specific surface area makes it difficult to obtain high-quality anhydrous lithium hydroxide. According to the method for preparing anhydrous lithium hydroxide of the present disclosure, because anhydrous lithium hydroxide is dried under certain conditions then pulverized once into a specific size, it is possible to obtain high-quality anhydrous lithium hydroxide while simplifying the process, and additional processing steps may be easily performed even after the pulverizing.

In some embodiments, the second heat-treatment may be performed at a temperature equal to or greater than about 950 °C, for example, about 950 °C to about 1100 °C, about 975 °C to about 1050 °C, or about 975 °C to about 1000 °C, and for example, about 950 °C, about 975 °C, or about 1000°C. The second heat-treatment may be performed for 1 hour to 48 hours, for example, for 4 hour to 42 hours, 8 hour to 36 hours, 12 hour to 32 hours, or 18 hour to 28 hours.

The conventional method of mixing and firing a hydroxide precursor and a lithium raw material may reduce the porosity of the positive electrode active material and increase the pellet density by growing the particles through increasing the firing temperature. The increased particle size contributes to an increase in the resistance, which in turn, reduces the energy capacity, limiting the increase of the firing temperature. The optimal firing temperature cannot be a relatively low temperature, and ultimately, it is difficult to increase both energy capacity and pellet density at the same time. On the other hand, embodiments of the present disclosure may increase the pellet density and improve the energy capacity at the same time by firing at a relatively higher temperature compared to when a hydroxide precursor is used. Without being bound to any particular theory, because the large surface area of the oxide precursor enables a favorable reaction between the oxide precursor and the lithium raw material, and the lithium-manganese-rich positive electrode active material is synthesized with a layered crystal structure with fewer defects, better conductivity can be achieved. The second heat-treatment may be performed at a temperature equal to or greater than about 950 °C or equal to or greater than about 1000 °C, and accordingly, a positive electrode active material having both high pellet density and energy capacity and improved energy capacity per volume may be prepared.

### Positive Electrode Active Material Precursor

The precursor of a lithium-manganese-rich positive electrode active material includes an oxide precursor, in particular a nickel-manganese-based oxide having a manganese content of about 34 mol% to about 50 mol% based on 100 mol% of a total metal, and having a peak full width at half maximum (FWHM) in the (012) crystal plane of the R-3 space group of about 0.5 to about 3, for example about 1 to about 3, based on the X-ray diffraction spectrum. The oxide precursor may be obtained through a first heat-treatment. The crystal structure of the oxide precursor corresponds to the R-3 space group, and may also have a (104) crystal plane belonging to the R-3 space group, and/or a (024) crystal plane belonging to the R-3 space group. The final positive electrode active material may have a crystal structure of the R-3m space group.

For example, unlike the hydroxide precursor, the oxide precursor may exhibit peaks at multiple positions in 2θ values, such as (22-27)°, (30-35)°, and (49-52)°, in the X-ray diffraction spectrum. The peak full width at half maximum (FWHM) in the (012) crystal plane of the R-3 space group, where the 2θ value corresponds to (22-27)°, is about 0.5 to about 3, and for example, may be about 1 to about 3, or about 1.5 to about 2.5. The peak full width at half maximum (FWHM) on the (104) crystal plane of the R-3 space group, where the 2θ value corresponds to (30-35)°, may be about 0.5 to about 3, for example, about 1 to about 3, or about 1 to about 2. The peak full width at half maximum (FWHM) on the (024) crystal plane where the 2θ value corresponds to (49-52)° may be about 0.5 to about 2, for example, about 1 to about 2, or about 1.5 to about 2. The BET specific surface area of the positive electrode active material precursor may be about 10 m²/g to about 50 m²/g, about 15 m²/g to about 40 m²/g, about 18 m²/g to about 38 m²/g, or about 20 m²/g to about 35 m²/g. An oxide precursor according to some embodiments may be prepared by firing a hydroxide precursor under specific temperature range and conditions, and may have a significantly improved BET specific surface area compared to the hydroxide precursor. In this manner, the reactivity between the oxide precursor and the lithium raw material increases, thereby improving both the energy capacity and energy density of the synthesized positive electrode active material.

An average particle diameter (D₅₀) of the oxide precursor may be, for example, about 2 µm to about 18 µm, about 3 µm to about 15 µm, about 4 µm to about 13 µm, or about 5 µm to about 12 µm. The average particle diameter may be obtained by measuring the sizes (e.g., particle diameter, major axis, or major axis length) of about 20 random particles in the SEM image of the precursor, and then obtaining a particle size distribution, and taking the size of the particles having a cumulative volume of 50 volume% as the average particle diameter.

The oxide precursor may be, for example, represented by Chemical Formula 21:

**[Chemical Formula 21]** Ni_{y21}Mn_{z21}M²¹_{1-y21-z21}O₃

In Chemical Formula 21, 0.5≤y21≤0.66, 0.34≤z21≤0.5, and M²¹ may be one or more elements selected from Al, B, Ba, Ca, Ce, Co, Cr, Cu, Fe, Mg, Mo, Nb, Si, Sn, Sr, Ti, V, W, Y, Zn, or Zr.

In Chemical Formula 21, for example 0.5≤y21≤0.6, and 0.4≤z21≤0.5, or 0.5≤y21≤0.55, and 0.45≤z21≤0.5.

### Positive Electrode Active Material

A lithium-manganese-rich positive electrode active material has improved energy capacity per volume and energy density. The positive electrode active material includes a lithium nickel-manganese-based composite oxide having a manganese content of about 34 mol% to about 50 mol% based on 100 mol% of a total metal excluding lithium, and has a ratio of a peak intensity of a (003) crystal plane to a peak intensity of a (104) crystal plane of a R-3m space group in an X-ray diffraction spectrum of about 0.86 to about 1.1, for example about 0.86 to about 1.04.

The crystal structure of the positive electrode active material corresponds to the R-3m space group, and is distinguished from the oxide precursor having a crystal structure of the R-3 space group. For example, the (104) crystal plane of the R-3m space group and the (104) crystal plane of the R-3 space group should be understood as different crystal planes. The positive electrode active material may have a (104) crystal plane of the R-3m space group and/or a (003) crystal plane of the R-3m space group.

The positive electrode active material has a ratio of the peak intensity of the (003) crystal plane to the peak intensity of the (104) crystal plane of the R-3m space group in the X-ray diffraction spectrum of about 0.86 to about 1.1, for example about 0.86 to about 1.04, or about 0.90 to about 0.99.

The positive electrode active material may have a full width at half maximum (FWHM) of the (104) crystal plane peak of the R-3m space group of about 0.310 to about 0.340, for example about 0.310 to about 0.330, and a full width at half maximum of the (003) crystal plane peak of about 0.15 to about 0.165, for example about 0.15 to about 0.158, of the R-3m space group in the X-ray diffraction spectrum.

The positive electrode active material may have a ratio of an c-axis lattice constant to an a-axis lattice constant of about 4.951 to about 4.953 in the X-ray diffraction spectrum.

An average particle diameter (D₅₀) of the positive electrode active material may be, for example, about 2 µm to about 18 µm, and specifically, about 3 µm to about 15 µm, about 4 µm to about 13 µm, or about 5 µm to about 12 µm. The average particle diameter may be obtained by measuring the sizes (e.g., particle diameter, major axis, or major axis length) of about 20 random particles in the SEM image of the positive electrode active materials, and then obtaining a particle size distribution, and taking the size of the particles having a cumulative volume of 50 volume% as the average particle diameter.

A pellet density of the positive electrode active material may be equal to or greater than about 2.7 g/cc, for example, equal to or greater than about 2.85 g/cc, or about 2.85 g/cc to about 3.00 g/cc, or about 2.90 g/cc to about 2.95 g/cc. The positive electrode active material according to some embodiments may have a greater pellet density than conventional lithium-manganese-rich positive electrode active materials, and thus can exhibit a greater energy capacity per volume.

The energy capacity per volume of the positive electrode active material may be equal to or greater than about 520 mAh/cc, for example, equal to or greater than about 554 mAh/cc, or about 554 mAh/cc to about 565 mAh/cc, or about 558 mAh/cc to about 563 mAh/cc.

The lithium-manganese-rich positive electrode active material may exhibit energy capacity by the oxidation-reduction reaction of a transition metal while simultaneously exhibiting energy capacity by the oxidation-reduction reaction of oxygen.

The lithium-manganese-rich positive electrode active material may be represented by, for example, Chemical Formula 1:

**[Chemical Formula 1]** a[Li₁₊ₓ(Ni_{y}Mn_{z}M¹_{1-y-z})₁₋ₓO₂] + (1-a)[b(LiNiⱼMnₖM¹₁₋ⱼ₋ₖO₂) + c(Li₂Mn_{w}M¹_{1-w}O₃)]

where, in Chemical Formula 1, 0≤a≤1, 0.03≤x≤0.2, 0.50≤y≤0.66, 0.34≤z≤0.50, 0<b<1, 0<c<1, 0.5≤j≤1.0, 0.5≤k≤1.0, 0.9≤w≤1.0, and M¹ may be one or more elements selected from Al, B, Ba, Ca, Ce, Co, Cr, Cu, Fe, Mg, Mo, Nb, Si, Sn, Sr, Ti, V, W, Y, Zn, and Zr. For example, Chemical Formula 1 may be a[Li₁₊ₓ(Ni_{y}Mn_{1-y})₁₋ₓO₂] + (1-a)[b(LiNi_{z}Mn_{1-z}O₂) + c(Li₂MnO₃) in which 0≤a≤1, 0.03≤x≤0.2, 0.50≤y≤0.66, 0<b<1, 0<c<1 and 0.5≤z≤1.

In Chemical Formula 1, [Li₁₊ₓ(Ni_{y}Mn_{z}M¹_{1-y-z})₁₋ₓO₂] (for example, [Li₁₊ₓ(Ni_{y}Mn_{1-y})₁₋ₓO₂]) represents a solid-solution phase, and [b(LiNiⱼMnₖM¹₁₋ⱼ₋ₖO₂)+c(Li₂Mn_{w}M¹_{1-w}O₃)] (for example, [b(LiNi_{z}Mn_{1-z}O₂)+c(Li₂MnO₃)]) represents a composite phase. The compound represented by Chemical Formula 1 may have a solid-solution phase and/or a composite phase structure.

As used herein, a solid solution refers to a solid mixture in which different elements are completely and uniformly mixed. The solid solution may refer to other elements being mixed into the solid crystal and distributed uniformly, similar to a solution in which a solute is uniformly distributed in a solvent. The solid solution may be the formation of a continuous quasi-isostructural (e.g., continuum quasi-isostructural) compound with new properties due to the strong interrelationship of two or more individual components. The solid solution is homogeneous, has almost the same composition, and may have a single phase or a single crystal structure. In contrast, a composite is made up of two or more materials combined, and may be made up of materials with different physical properties, and the materials remain physically distinct. The composite is heterogeneous and has two or more compositions and/or two or more phases or crystal structures.

According to some embodiments, a lithium-manganese-rich positive electrode active material may include a material having not only a composite phase but also a solid-solution phase, for example, a material in which a composite and a solid solution are mixed, or a material in which a composite and a solid solution competitively coexist. The value of a in Chemical Formula 1 may be in the range of 0<a<1. The lithium-manganese-rich positive electrode active material may be represented, for example, by:
0.3[Li_{1.13}Ni_{0.44}Mn_{0.44}O₂] + 0.7[0.61 (LiNi_{0.72}Mn_{0.28}O₂) + 0.26(Li₂MnO₃)],
0.15[Li_{1.13}Ni_{0.57}Mn_{0.30}O₂] + 0.85[0.61(LiNi_{0.94}Mn_{0.06}O₂) + 0.26(Li₂MnO₃)],
0.41[Li_{1.09}Ni_{0.46}Mn_{0.46}O₂] + 0.59[0.85(LiNi_{0.56}Mn_{0.44}O₂) + 0.10(Li₂MnO₃)], or
0.43[Li_{1.05}Ni_{0.48}Mn_{0.48}O₂] + 0.57[0.85(LiNi_{0.56}Mn_{0.44}O₂) + 0.10(Li₂MnO₃)], but is not limited thereto]

A lithium-manganese-rich positive electrode active material may have a molar ratio of lithium to a total metal excluding lithium of, for example, equal to or greater than about 1.1 and less than or equal to about 1.2.

In Chemical Formula 1, (1+x) is a molar ratio of lithium, and (1+x) / (1-x) refers to a ratio of a lithium content to a total content of metal excluding lithium. In Chemical Formula 1, the range of x may be 0.03≤x≤0.2 for example 0.03≤x≤0.15, 0.03≤x≤0.13, 0.03≤x≤0.11, or 0.03≤x≤0.09. Alternatively, the range of x may be 0.03≤x≤0.33, for example 0.03≤x≤0.30.

In some embodiments, a cobalt content based on 100 mol% of the total metal excluding lithium in the lithium-manganese-rich positive electrode active material may be 0 mol% to about 1 mol%, or 0 mol% to about 0.1 mol%, or 0 mol% to about 0.01 mol%.

### Positive Electrode

A positive electrode includes a positive electrode current collector, and a positive electrode active material layer on the positive electrode current collector, wherein the positive electrode active material layer may include the lithium-manganese-rich positive electrode active material. The positive electrode active material layer may include a different type of positive electrode active material in addition to the lithium-manganese-rich positive electrode active material, and optionally may include a binder, a conductive material, or a combination thereof.

### Binder

The binder may improve binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material may provide electrode conductivity. Any electrically conductive material may be used as a conductive material unless it causes a detrimental chemical change. Non-limiting examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

An amount of the binder and the conductive material may be about 0.5 wt% to about 5 wt%, respectively, based on 100 wt% of the positive electrode active material layer.

The positive electrode current collector may include Al foil or SUS (Steel Use Stainless) foil (also known as stainless steel foil), but is not limited thereto.

### Rechargeable Lithium Battery

A rechargeable lithium battery may include a positive electrode including the lithium-manganese-rich positive electrode active material, a negative electrode, and an electrolyte. The rechargeable lithium battery may be a lithium ion battery using a liquid electrolyte, or may be an all-solid-state rechargeable battery or a semi-solid rechargeable battery using a solid electrolyte. By way of example, a lithium-ion battery is described.

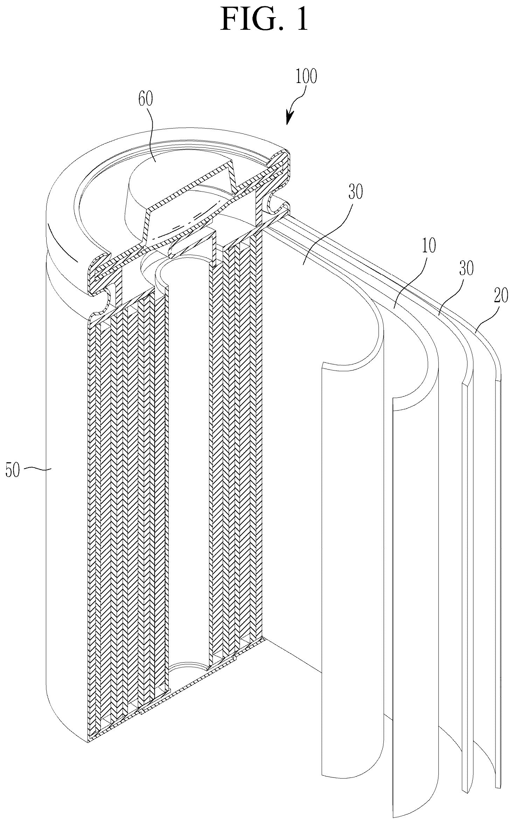

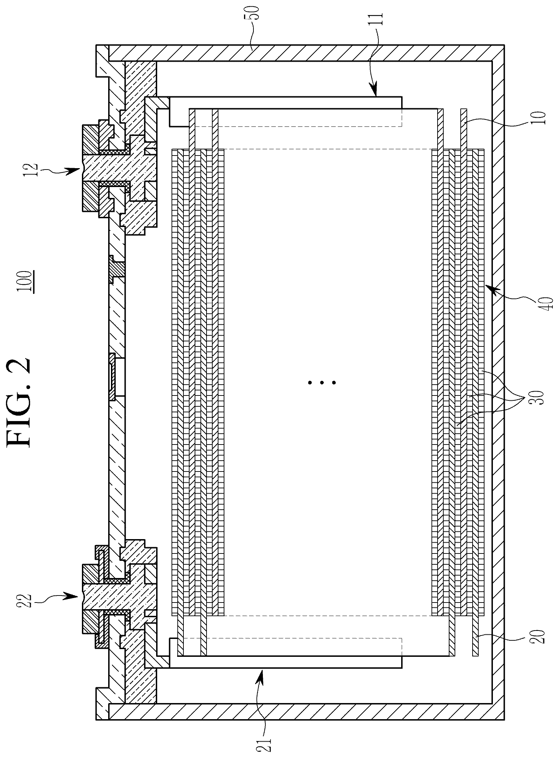

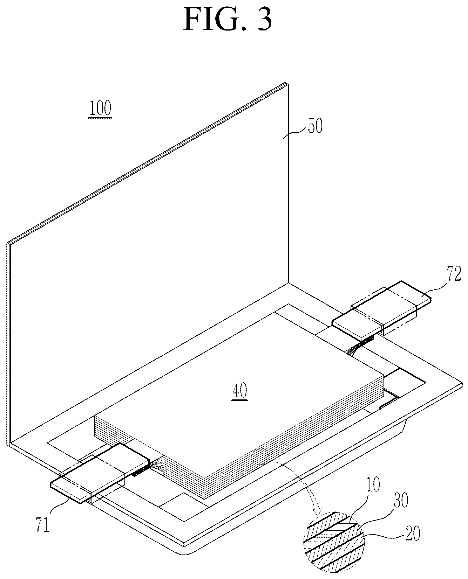

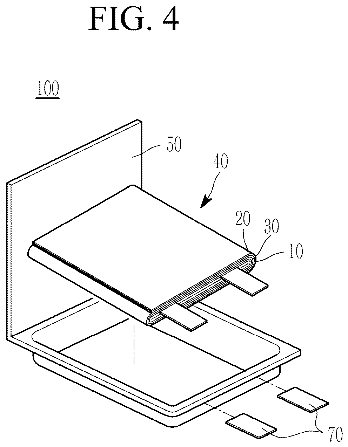

The rechargeable lithium battery may be classified into cylindrical, prismatic, pouch, coin, etc. depending on the geometry. FIGS. 1 to 4 are schematic views illustrating a rechargeable lithium battery. FIG. 1 shows a cylindrical battery, FIG. 2 shows a prismatic battery, and FIGS. 3 and 4 show pouch-type batteries. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 sealing the case 50 as shown in FIG. 1. In addition, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

### Negative Electrode

The negative electrode may include a current collector and a negative electrode active material layer on the current collector, and may include a negative electrode active material, a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. When the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67. As used herein, when a definition is not otherwise provided, an average particle diameter (D₅₀) indicates a particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder may serve to adhere the negative electrode active material particles to one another and to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of providing viscosity may be included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material may be included to provide electrode conductivity and any electrically conductive material may be used as a conductive material unless it causes a chemical change. Non-limiting examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

An amount of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material based on 100 wt% of the negative electrode active material layer.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may include vinyl ethylene carbonate, vinylene carbonate, or an ethylene carbonate-based compound to improve battery cycle-life.

Non-limiting examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Non-limiting examples of the lithium salt may include LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be about 0.1 M to about 2.0 M, ensuring ionic conductivity and viscosity, where lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g. TEFLON^{™}), or a copolymer or a mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

### EXAMPLES

The following examples are provided for illustrative purposes only and are not intended to limit the scope of the disclosure.

### Comparative Example 1

### Preparation of Positive Electrode Active Material

A mixed solution of metal raw materials was prepared by dissolving nickel sulfate (NiSO₄ · 6H₂O) and manganese sulfate (MnSO₄ · H₂O) at a molar ratio of Ni:Mn = 50:50 in distilled water. In order to form a complex compound, aqueous ammonia (NH₄OH) and sodium hydroxide (NaOH) as a precipitant were prepared.

After adding the aqueous ammonia at a concentration of 0.25 M to a reactor, the metal raw material mixed solution and the complex agent were injected at a rate of 142 ml/min and 34 ml/min, respectively, and a stirring power of 3.0 kW/m³ at 50 °C to initiate a reaction. While NaOH was injected to maintain pH, the reaction was performed for 30 hours. The reaction was terminated when an average size of the obtained particles reached about 10 µm. The obtained resulting material was washed and dried with hot air at about 150 °C for 24 hours to obtain nickel-manganese-based hydroxide (Ni_{0.5}Mn_{0.5}(OH)₂), which is a hydroxide precursor.

The prepared Ni_{0.5}Mn_{0.5}(OH)₂ precursor and LiOH were mixed so that the molar ratio of Li/(Ni+Mn) was 1.12, and heat-treated at 1000 °C for 24 hours in an oxygen atmosphere to prepare a lithium-manganese-rich positive electrode active material.

### 2. Manufacturing of Rechargeable Lithium Battery Cell (Half-cells)

96 wt% of the positive electrode active material, 2 wt% of a polyvinylidene fluoride binder, and 2 wt% of a carbon nanotube conductive material were mixed to prepare positive electrode active material layer slurry, and the slurry was coated on an aluminium foil current collector and then, dried and compressed to manufacture a positive electrode. Here, a loading level of the positive electrode active material layer was 10 mg/cm², and a density of the final compressed positive electrode was about 3.5 g/cc.

A polytetrafluoroethylene separator was interposed between the manufactured positive electrode and the lithium counter electrode, and the battery case was inserted, and an electrolyte solution including 1 M LiPF₆ dissolved in a solvent mixed with ethylene carbonate, ethyl methyl carbonate, and dimethyl carbonate in a volume ratio of 2:4:4 and 1.5 wt% of vinylene carbonate added was injected into the case, thereby manufacturing a rechargeable lithium battery cell by a conventional method.

### Example 1

A lithium-manganese-rich positive electrode active material and a rechargeable lithium battery cell according to Example 1 were manufactured substantially in the same manner as in Comparative Example 1, except that in preparing the positive electrode active material of Example 1, Ni_{0.5}Mn_{0.5}(OH)₂ was primarily heat-treated in a first heat-treatment step to manufacture a nickel-manganese-based oxide precursor at 400 °C for 6 hours under an oxygen atmosphere, and the nickel-manganese-based oxide precursor was mixed with LiOH to have a molar ratio of Li/(Ni+Mn) = 1.12, and then, secondarily heat-treated in a second heat-treatment step at 1000 °C for 24 hours under an oxygen atmosphere.

### Example 2

A positive electrode active material and a rechargeable lithium battery cell according to Example 2 were manufactured substantially in the same manner as in Example 1, except that the first heat-treatment temperature was 450 °C.

### Example 3

A positive electrode active material and a rechargeable lithium battery cell according to Example 3 were manufactured substantially in the same manner as in Example 1, except that the first heat-treatment temperature was 500 °C.

### Comparative Example 2

A positive electrode active material and a rechargeable lithium battery cell according to Comparative Example 2 were manufactured substantially in the same manner as in Example 1, except that the first heat-treatment temperature was 600 °C.

Table 1 shows design details and analysis results of the precursors, the positive electrode active materials, and the battery cell of Examples 1 to 3 and Comparative Examples 1 and 2.

**(Table 1)**

| | unit | Comparative Example 1 | Example 1 | Example 2 | Example 3 | Comparative Example 2 |
|---|---|---|---|---|---|---|
| First firing temperature | °C | None | 400 | 450 | 500 | 600 |
| BET specific surface area of precursor | m²/g | 9.3 | 34.0 | 20.2 | 10.4 | 3.8 |
| FWHM (012) of precursor | degree | N/A | 2.45 | 1.61 | 0.55 | 0.27 |
| FWHM (104) of precursor | degree | N/A | 1.87 | 1.39 | 0.53 | 0.31 |
| FWHM (024) of precursor | degree | N/A | 1.57 | 1.94 | 0.67 | 0.40 |
| Second firing temperature | °C | 1000 | | | | |
| Composition (Li/Me, Ni:Mn) | | 1.12, 50:50 | | | | |
| D₅₀ | µm | 10.2 | 10.3 | 10.3 | 10.3 | 10.4 |
| P / D | g/cc | 2.84 | 2.93 | 2.92 | 2.85 | 2.82 |
| I_{(003).R-3m} / I_{(104).R-3m} | | 0.852 | 0.919 | 0.928 | 1.052 | 0.846 |
| c / a | | 4.950 | 4.951 | 4.953 | 4.953 | 4.954 |
| FWHM _{(003).R-3m} | degree | 0.158 | 0.156 | 0.158 | 0.163 | 0.169 |
| FWHM _{(104).R-3m} | degree | 0.377 | 0.330 | 0.318 | 0.334 | 0.345 |
| 1st 4.7 V charge capacity | mAh/g | 240.6 | 245.7 | 247.4 | 247.1 | 263.6 |
| 2nd 4.45 V discharge capacity | | 188.4 | 190.5 | 192.7 | 194.3 | 191.9 |
| Reversible discharge capacity ratio | % | 78.3 | 77.5 | 77.9 | 78.6 | 72.8 |
| Capacity per volume | mAh/cc | 535 | 558 | 563 | 554 | 541 |
| Voltage drop | mV | 63 | 64 | 69 | 46 | 55 |

### Evaluation Example 1: Precursor Surface Observation through SEM

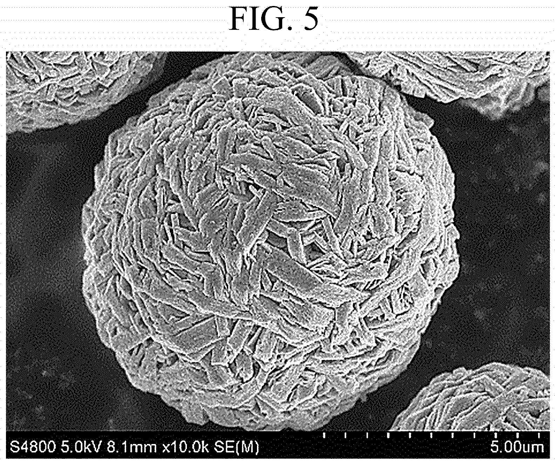

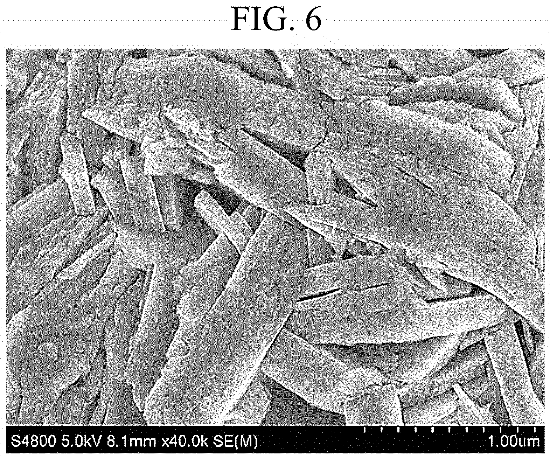

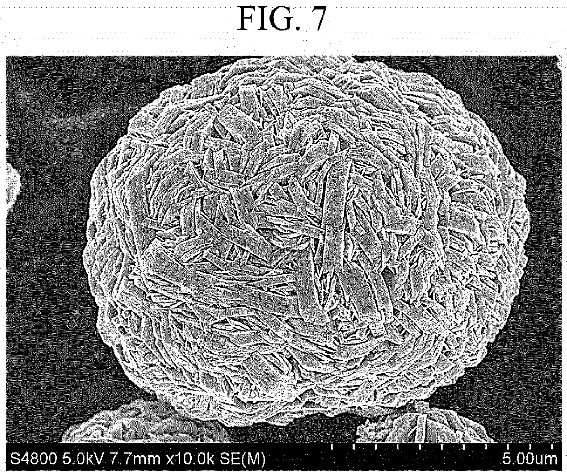

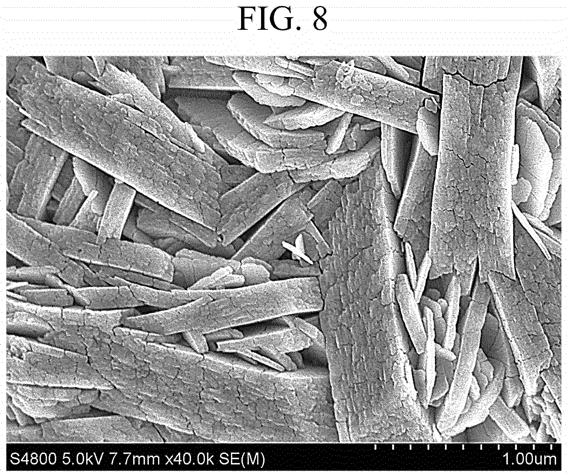

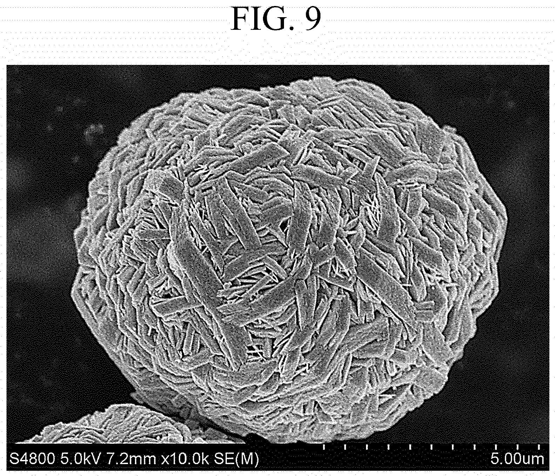

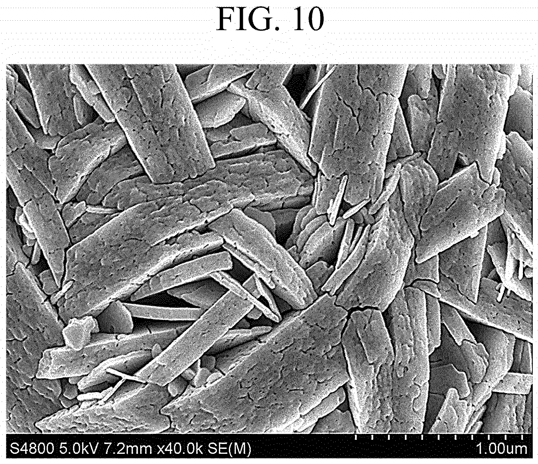

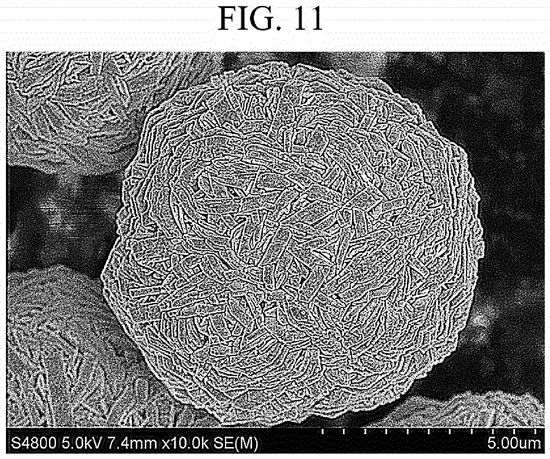

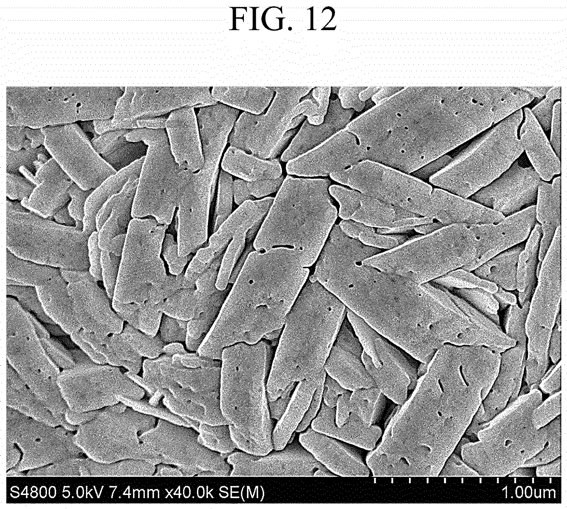

SEM images of the hydroxide precursor (Ni_{0.5}Mn_{0.5}(OH)₂) of Comparative Example 1 were taken, as shown in FIGS. 5 and 6, and SEM images of the oxide precursor of Example 1 were taken , as shown in FIGS. 7 and 8. SEM images of the oxide precursor of Example 3 were taken, as shown in FIGS. 9 and 10, and SEM images of the oxide precursor of Comparative Example 2 were taken, as shown in FIGS. 11 and 12.

Referring to FIGS. 5 to 12, the hydroxide precursor of Comparative Example 1 and the oxide precursors of Example 1 and Comparative Example 2 had different surface geometries. In addition, comparing the oxide precursors of Example 1 with the oxide precursor of Comparative Example 2, the surface geometries varied depending on a temperature of the first heat treatment.

### Evaluation Example 2: Analysis of BET Specific Surface Area of Precursor

The hydroxide precursor of Comparative Example 1 was measured with respect to a BET specific surface area, and the oxide precursors of Examples 1 to 3 and Comparative Example 2 were measured with respect to a BET specific surface area, and the results are shown in Table 1.

The BET specific surface area was measured, for example, by using a BET specific surface area measuring device, HM model-1208 manufactured by MOUNTECH in a nitrogen gas adsorption method. Specifically, about 0.3 g of each sample was heated at 300 °C in a preprocessor under a nitrogen atmosphere for 1 hour, additionally pre-treated at 300 °C in the BET specific surface area measuring device for 15 minutes, and then, cooled to a temperature of liquid nitrogen, and saturated by adsorption with gas containing 30 vol% of nitrogen and 70 vol% of helium. Subsequently, the sample was heated to room temperature to measure an amount of gas desorbed therefrom, which was used to calculate the BET specific surface area in a conventional BET method.

Referring to Table 1, the oxide precursors of Examples 1 to 3 had the BET specific surface area of equal to or greater than about 10 m²/g, for example, equal to or greater than about 20 m²/g, which was greater than that of the precursors of Comparative Examples 1 and 2. Without being bound by any particular theory, because an oxide precursor was obtained by firing a hydroxide precursor at a low temperature, a significantly increased BET specific surface area was achieved compared to that of the hydroxide precursor. Reactivity between the oxide precursor and a lithium raw material was improved in a process of mixing the oxide precursor with the lithium raw material then, firing the mixture, thereby realizing high energy capacity (energy capacity per weight) and simultaneously, improving density and resultantly, significantly improving energy capacity per volume. As in Comparative Example 2, when the first firing temperature exceeds a certain level, the oxide precursor was confirmed to have a reduced BET specific surface area. By setting the firing at an appropriate temperature, an oxide precursor with a high BET specific surface area could be synthesized.

### Evaluation Example 3: X-ray Diffraction Analysis of Precursor

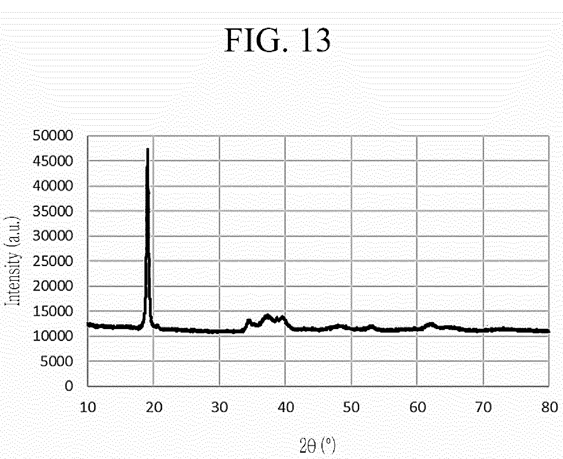

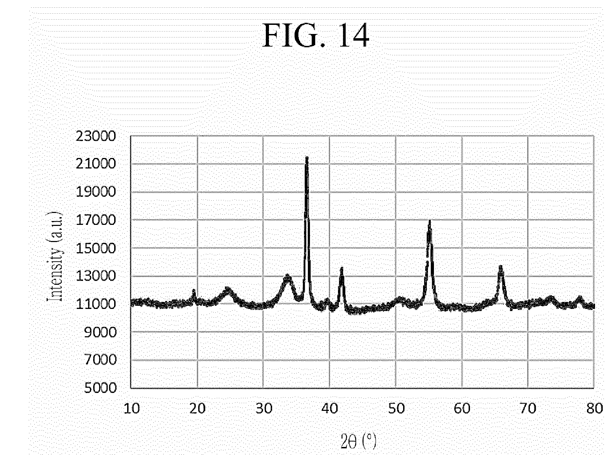

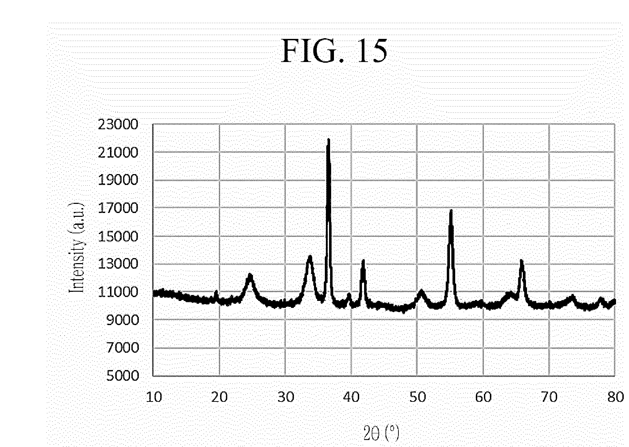

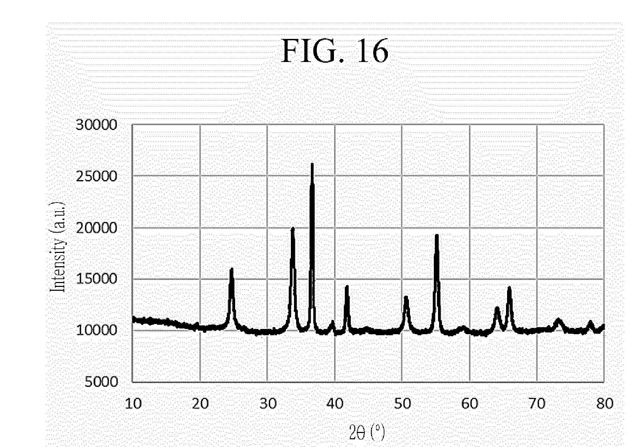

The hydroxide precursor of Comparative Example 1, the oxide precursors of Examples 1 and 3, and the oxide precursor of Comparative Example 2 were subjected to X-ray diffraction analysis, and the results in order are shown in FIGS. 13 to 16.

The X-ray diffraction analysis was performed using Bruker's Powder XRD (D8 Advance) equipment under the following conditions:
X-ray wavelength: 1.5406 Å (CuK α 1)
Slit condition: Divergence Slit 0.5 °, Scattering Slit 0.5 °, Receiving Slit 0.20 mm Scan condition: Continuous Scan, 10 ° ≤2θ≤80 °, 0.01 °/step, 1.27 °/min, total measurement time 55 min.

Referring to FIGS. 13 to 16, the hydroxide precursors and the oxide precursors exhibited different XRD patterns, wherein the XRD patterns of the oxide precursors of Examples 1 and 3 exhibited a plurality of peaks of 22 to 27 °, 30 to 35 °, 49 to 52 °, and the like, which were not present in that of the hydroxide precursor of Comparative Example 1. In the XRD patterns of the oxide precursors of Examples 1 and 3 and Comparative Example 2, the peaks (2θ= 22 to 27 °, 30 to 35 °, and 49 to 52 °) on the (012) crystal plane, the (104) crystal plane, and the (024) crystal plane of the R-3 space group was measured with respect to a full width at half maximum (FWHM), and the results are shown in Table 1. Referring to Table 1, the oxide precursors of Examples 1 and 3 exhibited the full width at half maximum (FWHM) on the (012) crystal plane at 0.5 to 3, the full width at half maximum (FWHM) on the (104) crystal plane at 0.5 to 3, and the full width at half maximum (FWHM) on the (024) crystal plane at 0.5 to 2.

### Evaluation Example 4: Evaluation of Properties of Positive Electrode Active Material

The lithium-manganese-rich positive electrode active materials of Examples 1 to 3 and Comparative Examples 1 and 2 were measured with respect to an average particle diameter (D₅₀) and pellet density (P/D), which are shown in Table 1, and also, subjected to X-ray diffraction analysis to obtain a ratio of peak intensity of the (003) crystal plane to that of the (104) crystal plane of the R-3m space group (I_{(003).R-3m}/I_{(104).R-3m}), a ratio of c-axis lattice constant to a-axis lattice constant (c/a), and a full width at half maximum (FWHM) of each peak on the (003) crystal plane and the (104) crystal plane (FWHM_{(003).R-3m}, and FWHM_{(104).R-3m}), which are shown in Table 1.

The average particle diameter (D₅₀) was obtained by randomly measuring a size (a diameter or a length of major axis) of 20 particles from each scanning electron microscope image of the samples to obtain a particle distribution and taking a particle diameter at a cumulative volume of 50 volume% from the particle distribution as the average particle diameter.

The pellet density was measured by placing 3 g of each sample in a mold (area: 1.298 cm²), inserting a mold bar into a mold body, placing the mold set in a hydraulic pressure press, and pressing the sample with a pressure of 3 tons (Metric ton) for 30 seconds to make it into a pellet.

Referring to Table 1, the pellet density of the positive electrode active materials of Examples 1 to 3 was improved, compared with that of the positive electrode active materials of Comparative Examples 1 to 2.

The positive electrode active materials of Examples 1 to 3 exhibited a ratio of peak intensity of the (003) crystal plane to that of the (104) crystal plane within a range of 0.86 to 1.1 of the R-3m space group in the XRD analysis, a full width at half maximum (FWHM) of a (104) crystal plane peak of the R-3m space group within a range of 0.310 to 0.340, e.g. 0.310 to 0.330, and a full width at half maximum (FWHM) of a (003) crystal plane peak within a range of 0.150 to 0.165, e.g. 0.150 to 0.158, and a ratio of an c-axis lattice constant to an a-axis lattice constant within a range of 4.951 to 4.953.

### Evaluation Example 5: Battery Characteristics Evaluation

The rechargeable lithium battery cells of Examples 1 to 3 and Comparative Examples 1 to 2 were charged to 4.7 V at a constant current of 0.1 C and subsequently, maintained at the voltage to a current of 0.05 C and discharged to 2.5 V at the constant current of 0.1 C at 25 °C for the first charging and discharging. Subsequently, the cells were charged to 4.45 V at a constant current of 0.2 C and subsequently, maintained at the voltage to a current of 0.05 C and discharged to 2.5 V at the constant current of 0.2 C at 25 °C for the second charging and discharging.

Table 1 shows charge capacity at the first cycle, discharge capacity at the second cycle, and a ratio of the latter to the former as reversible discharge capacity ratio. In addition, the pellet density of the positive electrode active material and discharge capacity at the second cycle were multiplied to obtain energy capacity per volume, which is shown in Table 1.

Referring to Table 1, because Examples 1 to 3 exhibited high discharge capacity at the second cycle and simultaneously, high pellet density, the energy capacity per volume as a product of multiplying these also was improved, compared with Comparative Examples 1 to 2.

The voltage drop in Table 1 refers to a value obtained by subtracting an average discharge voltage at the 50^{th} cycle from an average discharge voltage at the first cycle. The average discharge voltage was obtained by integrating an area under a discharge voltage curve (voltage-capacity graph) and then, dividing the area by the discharge capacity.

Referring to Table 1, Examples 1 to 3 exhibited an equivalent or greater voltage drop than the comparative examples.

### Comparative Example 3

A positive electrode active material and a rechargeable lithium battery cell were manufactured substantially in the same manner as in Comparative Example 1 except that the heat-treatment temperature was 950 °C.

### Example 4

A positive electrode active material and a rechargeable lithium battery cell were manufactured substantially in the same manner as in Example 1 except that the first heat-treatment temperature was 500 °C, and the second heat-treatment temperature was 975 °C.

### Example 5

A positive electrode active material and a rechargeable lithium battery cell were manufactured substantially in the same manner as in Example 1 except that the first heat-treatment temperature was 500 °C, and the second heat-treatment temperature was 950 °C.

The results of Comparative Examples 1 and 3 are shown in Table 2, and the results of Examples 3 to 5 are shown in Table 3. The charging and discharging conditions and the measuring methods for each evaluation are the same. In Tables 2 and 3, the high-temperature cycle-life is determined by, after performing the first and second charge-discharge cycles as in Evaluation Example 5, charging at a constant current of 0.2 C to 4.45 V at 45 °C, then holding the voltage until the current value drops to 0.05 C, discharging at a constant current of 0.2 C to 2.5 V, repeating the cycle 50 times under same conditions except changing the charge and discharge C-rate to 1 C, and calculating the ratio of the 50th discharge capacity to the first discharge capacity at 1 C.

**(Table 2)**

| | | Comparative Example 1 | Comparative Example 3 |
|---|---|---|---|
| Heat-treatment temperature | °C | 1000 | 950 |
| P/D | g/cc | 2.84 | 2.78 |
| 1st 4.7 V charge capacity | mAh/g | 240.6 | 246.5 |
| 2nd 4.45 V discharge capacity | | 188.4 | 190.5 |
| Reversible discharge capacity ratio | % | 78.3 | 77.3 |
| Capacity per volume | mAh/cc | 535 | 530 |
| High-temperature cycle-life | % | 95.9 | 95.8 |

**(Table 3)**

| | | Example 3 | Example 4 | Example 5 |
|---|---|---|---|---|
| Second heat-treatment temperature | °C | 1000 | 975 | 950 |
| P/D | g/cc | 2.85 | 2.78 | 2.73 |
| 1st 4.7 V charge capacity | mAh/g | 247.1 | 246.5 | 247.6 |
| 2nd 4.45 V discharge capacity | | 194.3 | 193.8 | 192.6 |
| Reversible discharge capacity ratio | % | 78.6 | 78.6 | 77.8 |
| Capacity per volume | mAh/cc | 554 | 539 | 526 |
| High-temperature cycle-life | % | 95.1 | 95.3 | 96.0 |

Referring to Table 2, when using a hydroxide precursor, pellet density was increased by increasing the firing temperature, but reduction of energy capacity (e.g., discharge capacity at the second cycle) was limited, and as a result, an optimal firing temperature could not be set at a relatively low temperature, making it difficult to simultaneously increase both energy capacity and pellet density.

Referring to Table 3, when using an oxide precursor, unlike the comparative examples of Table 2, it was possible to increase both energy capacity and pellet density by increasing the firing temperature, thereby improving energy capacity per volume. Compared with a hydroxide precursor, it was possible to synthesize a lithium-manganese-rich positive electrode active material with both high pellet density and energy capacity by firing at a relatively high temperature.

### Example 6

A positive electrode active material and a rechargeable lithium battery cell were manufactured substantially in the same manner as in Example 3, except that Ni_{0.5}Mn_{0.5}(OH)₂ with an average particle diameter (D₅₀) of about 6.5 µm as the hydroxide precursor was used, so that the final positive electrode active material had an average particle diameter (D₅₀) of about 6.8 µm.

### Comparative Example 4

A positive electrode active material and a rechargeable lithium battery cell were manufactured substantially in the same manner as in Example 6, except that the hydroxide precursor was not manufactured into an oxide precursor as in Comparative Example 1 but was mixed with a lithium raw material and then, heat-treated at 1000 °C.

In Table 4, the analysis results of Example 6 and Comparative Example 4 are shown. Likewise, the charging and discharging conditions and the measuring methods for each evaluation are the same.

**(Table 4)**

| | | Comparative Example 4 | Example 6 |
|---|---|---|---|
| First heat-treatment temperature | °C | X | 500 |
| BET specific surface area of precursor | m²/g | 9.8 | 21.9 |
| Second heat-treatment temperature | °C | 1000 | 1000 |
| Composition (Li/Me, Ni:Mn) | | 1.12, 50:50 | 1.12, 50:50 |
| D₅₀ | µm | 6.8 | 6.8 |
| P / D | g/cc | 2.79 | 2.81 |
| c / a | | 4.951 | 4.953 |
| FWHM ₍₀₀₃₎ | | 0.166 | 0.158 |
| FWHM ₍₁₀₄₎ | | 0.305 | 0.310 |
| 1^{st} 4.7 V charge capacity | mAh/g | 246.1 | 251.0 |
| 2^{nd} 4.45 V discharge capacity | | 197.8 | 199.8 |
| Reversible discharge capacity ratio | % | 80.4 | 79.6 |
| Capacity per volume | mAh/cc | 552 | 561 |

Referring to Table 4, the positive electrode active material had an average particle diameter of about 6.8 µm, and accordingly, as shown in Example 6, the oxide precursor had a significantly increased a BET specific surface area. The lithium-manganese-rich positive electrode active material exhibited both improved energy capacity and density, exhibited all improved first charge capacity, second discharge capacity, a reversible discharge capacity ratio, and energy capacity per volume, compared with Comparative Example 4.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure.

Embodiments are set out in the following clauses:
Clause 1. A method for preparing a positive electrode active material comprising a lithium nickel-manganese-based composite oxide, the method comprising: (a) preparing a nickel-manganese-based oxide precursor by subjecting a nickel-manganese-based hydroxide, having a manganese content of about 34 mol% to about 50 mol% based on 100 mol% of a total metal, to a first heat-treatment at a temperature of less than or equal to about 500 °C; and (b) mixing the nickel-manganese-based oxide precursor and a lithium raw material to form a mixture at a molar ratio of lithium of the lithium raw material to the total metal of the nickel-manganese-based oxide precursor of greater than about 1 and less than about 2; and (c) subjecting the mixture to a second heat-treatment.
Clause 2. The method of Clause 1, wherein the first heat-treatment is performed at a temperature of about 400 °C to about 500 °C for about 1 to about 10 hours.
Clause 3. The method of Clause 1 or Clause 2, wherein the molar ratio is about 1.06 to about 2.
Clause 4. The method of any of Clauses 1 to 3, wherein the molar ratio is about 1.1 to about 1.3.
Clause 5. The method of any preceding Clause, wherein the lithium raw material comprises lithium hydroxide.
Clause 6. The method of any preceding Clause, wherein the second heat-treatment is performed at a temperature of greater than or equal to about 950 °C.
Clause 7. The method of any preceding Clause, wherein a BET specific surface area of the nickel-manganese-based oxide precursor is greater than a BET specific surface area of the nickel-manganese-based hydroxide.
Clause 8. The method of Clause 7, wherein the BET specific surface area of the nickel-manganese-based hydroxide is less than or equal to about 10 m²/g, and wherein the BET specific surface area of the nickel-manganese-based oxide is greater than about 10 m²/g.
Clause 9. The method of any preceding Clause, wherein the nickel-manganese-based oxide has a peak full width at half maximum of about 0.5 to about 3, for example about 1 to about 3, in a (012) crystal plane of a R-3 space group, a peak full width at half maximum of about 0.5 to about 3, for example about 1 to about 3, in a (104) crystal plane of a R-3 space group, and a peak full width at half maximum of about 0.5 to about 2, for example about 1 to about 2, in a (024) crystal plane of a R-3 space group based on an X-ray diffraction spectrum.
Clause 10. The method of any preceding Clause, wherein the obtained positive electrode active material has an average particle diameter (D₅₀) of about 2 µm to about 18 µm, a pellet density of greater than or equal to about 2.7 g/cc, for example greater than or equal to about 2.85 g/cc, and an energy capacity per volume of greater than or equal to about 520 mAh/cc, for example greater than or equal to about 554 mAh/cc.
Clause 11. A positive electrode active material precursor, comprising: a nickel-manganese-based oxide having a manganese content of about 34 mol% to about 50 mol% based on 100 mol% of a total metal, wherein a peak full width at half maximum in a (012) crystal plane of a R-3 space group based on an X-ray diffraction spectrum is about 0.5 to about 3, for example about 1 to about 3.
Clause 12. The positive electrode active material precursor of Clause 11, wherein the positive electrode active material precursor has a peak full width at half maximum of about 0.5 to about 3, for example about 1 to about 3, in a (104) crystal plane of the R-3 space group and a peak full width at half maximum of about 0.5 to about 2, for example about 1 to about 2, in a (024) crystal plane of the R-3 space group based on the X-ray diffraction spectrum.
Clause 13. The positive electrode active material precursor of Clause 11 or Clause 12, wherein the positive electrode active material precursor has a BET specific surface area of about 10 m²/g to about 50 m²/g, and an average particle diameter (D₅₀) of about 2 µm to about 18 µm.
Clause 14. A lithium-manganese-rich positive electrode active material, comprising: a lithium nickel-manganese-based composite oxide having a manganese content of about 34 mol% to about 50 mol% based on 100 mol% of a total metal excluding lithium, wherein a ratio of a peak intensity of a (003) crystal plane to a peak intensity of a (104) crystal plane of a R-3m space group based on an X-ray diffraction spectrum is about 0.86 to about 1.1, for example about 0.86 to about 1.04.
Clause 15. The lithium-manganese-rich positive electrode active material of Clause 14, wherein the positive electrode active material has a peak full width at half maximum of the (104) crystal plane of the R-3m space group of about 0.310 to about 0.340, for example about 0.310 to about 0.330, and a peak full width at half maximum of the (003) crystal plane of the R-3m space group of about 0.150 to about 0.165, for example about 0.150 to about 0.158, based on the X-ray diffraction spectrum.
Clause 16. The lithium-manganese-rich positive electrode active material of Clause 14 or Clause 15, wherein the positive electrode active material has a ratio of an c-axis lattice constant to an a-axis lattice constant of about 4.951 to about 4.953 based on the X-ray diffraction spectrum.
Clause 17. The lithium-manganese-rich positive electrode active material of any one of Clauses 14 to 16, wherein an average particle diameter (D₅₀) is about 2 µm to about 18 µm.
Clause 18. The lithium-manganese-rich positive electrode active material of any one of Clauses 14 to 17, wherein a pellet density is greater than or equal to about 2.7 g/cc, for example greater than or equal to about 2.85 g/cc, and wherein an energy capacity per volume is greater than or equal to about 520 mAh/cc, for example greater than or equal to about 554 mAh/cc.
Clause 19. The lithium-manganese-rich positive electrode active material of any one of Clauses 14 to 18, wherein the positive electrode active material exhibits energy capacity via a transition metal-based oxidation-reduction reaction and an oxygen-based oxidation-reduction reaction.
Clause 20. The lithium-manganese-rich positive electrode active material of any one of Clauses 14 to 19, wherein the lithium-manganese-rich positive electrode active material is represented by Chemical Formula 1:

   **[Chemical Formula 1]** a[Li₁₊ₓ(Ni_{y}Mn_{z}M¹_{1-y-z})₁₋ₓO₂] + (1-a)[b(LiNiⱼMnₖM¹₁₋ⱼ₋ₖO₂) + c(Li₂Mn_{w}M¹_{1-w}O₃)]

   wherein, in Chemical Formula 1, 0≤a≤1, 0.03≤x≤0.2, 0.50≤y≤0.66, 0.34≤z≤0.50, 0<b<1, 0<c<1, 0.5≤j≤1.0, 0.5≤k≤1.0, 0.9≤w≤1.0, and M¹ is one or more elements selected from Al, B, Ba, Ca, Ce, Co, Cr, Cu, Fe, Mg, Mo, Nb, Si, Sn, Sr, Ti, V, W, Y, Zn, and Zr, for example Chemical Formula 1 may be a[Li₁₊ₓ(Ni_{y}Mn_{1-y})₁₋ₓO₂] + (1-a)[b(LiNizMn1-zO2) + c(Li2MnO3)] in which 0≤a≤1, 0.03≤x≤0.2, 0.50≤y≤0.66, 0<b<1, 0<c<1, and 0.5≤z≤1.0.

### <Description of representative symbols>

| | | | |
|---|---|---|---|
| 100 : | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A method for preparing a positive electrode active material comprising a lithium nickel-manganese-based composite oxide, the method comprising:
preparing a nickel-manganese-based oxide precursor by subjecting a nickel-manganese-based hydroxide, having a manganese content of about 34 mol% to about 50 mol% based on 100 mol% of a total metal, to a first heat-treatment at a temperature of less than or equal to about 500 °C;
mixing the nickel-manganese-based oxide precursor and a lithium raw material to form a mixture at a molar ratio of lithium of the lithium raw material to the total metal of the nickel-manganese-based oxide precursor of greater than about 1 and less than or equal to about 2; and
subjecting the mixture to a second heat-treatment.

2. The method as claimed in claim 1, wherein the first heat-treatment is performed at a temperature of about 400 °C to about 500 °C for about 1 to about 10 hours.

3. The method as claimed in claim 1 or claim 2, wherein the molar ratio is from about 1.06 to about 2,
optionally from about 1.1 to about 1.3.

4. The method as claimed in any preceding claim, wherein the lithium raw material comprises lithium hydroxide.

5. The method as claimed in any preceding claim, wherein the second heat-treatment is performed at a temperature of equal to or greater than about 950 °C.

6. The method as claimed in any preceding claim, wherein a BET specific surface area of the nickel-manganese-based oxide precursor is greater than a BET specific surface area of the nickel-manganese-based hydroxide,
optionally wherein the BET specific surface area of the nickel-manganese-based hydroxide is less than about 10 m²/g, and wherein the BET specific surface area of the nickel-manganese-based oxide precursor is greater than or equal to about 10 m²/g.

7. The method as claimed in any preceding claim, wherein the nickel-manganese-based oxide precursor has a peak full width at half maximum (FWHM) of about 0.5 to about 3 in a (012) crystal plane of a R-3 space group, a peak full width at half maximum (FWHM) of about 0.5 to about 3 in a (104) crystal plane of a R-3 space group, and a peak full width at half maximum (FWHM) of about 0.5 to about 2 in a (024) crystal plane of a R-3 space group based on an X-ray diffraction spectrum.

8. The method as claimed in any preceding claim, wherein the positive electrode active material has an average particle diameter (D₅₀) of about 2 µm to about 18 µm, a pellet density of equal to or greater than about 2.7 g/cc, and an energy capacity per volume of equal to or greater than about 520 mAh/cc.

9. A positive electrode active material precursor, comprising:
a nickel-manganese-based oxide having a manganese content of about 34 mol% to about 50 mol% based on 100 mol% of a total metal,
wherein a peak full width at half maximum (FWHM) in a (012) crystal plane of a R-3 space group based on an X-ray diffraction spectrum is about 0.5 to about 3.

10. The positive electrode active material precursor as claimed in claim 9, wherein the positive electrode active material precursor has a peak full width at half maximum (FWHM) of about 0.5 to about 3 in a (104) crystal plane of the R-3 space group and a peak full width at half maximum (FWHM) of about 0.5 to about 2 in a (024) crystal plane of the R-3 space group based on the X-ray diffraction spectrum,
optionally wherein the positive electrode active material precursor has a BET specific surface area of about 10 m²/g to about 50 m²/g and an average particle diameter (D₅₀) of about 2 µm to about 18 µm.

11. A lithium-manganese-rich positive electrode active material, comprising:
a lithium nickel-manganese-based composite oxide having a manganese content of about 34 mol% to about 50 mol% based on 100 mol% of a total metal excluding lithium,
wherein a ratio of a peak intensity of a (003) crystal plane to a peak intensity of a (104) crystal plane of a R-3m space group based on an X-ray diffraction spectrum is about 0.86 to about 1.1.

12. The lithium-manganese-rich positive electrode active material as claimed in claim 11, wherein the positive electrode active material has a peak full width at half maximum (FWHM) of the (104) crystal plane of the R-3m space group of about 0.310 to about 0.340, and a peak full width at half maximum (FWHM) of the (003) crystal plane of the R-3m space group of about 0.150 to about 0.165based on the X-ray diffraction spectrum,
optionally wherein the positive electrode active material has a ratio of an c-axis lattice constant to an a-axis lattice constant of about 4.951 to about 4.953 based on the X-ray diffraction spectrum.

13. The lithium-manganese-rich positive electrode active material as claimed in claim 11 or claim 12, wherein an average particle diameter (D₅₀) is about 2 µm to about 18 µm,
optionally wherein a pellet density is equal to or greater than about 2.7 g/cc, and wherein a energy capacity per volume is equal to or greater than about 520 mAh/cc.

14. The lithium-manganese-rich positive electrode active material as claimed in any one of claims 11 to 13, wherein the positive electrode active material exhibits energy capacity via a transition metal based oxidation-reduction reaction and an oxygen based oxidation-reduction reaction.

15. The lithium-manganese-rich positive electrode active material as claimed in any one of claims 11 to 14, wherein the lithium-manganese-rich positive electrode active material is represented by Chemical Formula 1:
**[Chemical Formula 1]** a[Li₁₊ₓ(Ni_{y}Mn_{z}M¹_{1-y-z})₁₋ₓO₂] + (1-a)[b(LiNiⱼMnₖM¹₁₋ⱼ₋ₖO₂)+c(Li₂Mn_{w}M¹_{1-w}O₃)]
wherein, in Chemical Formula 1, 0≤a≤1, 0.03≤x≤0.2, 0.50≤y≤0.66, 0.34≤z≤0.50, 0<b<1, 0<c<1, 0.5≤j≤1.0, 0.5≤k≤1.0, 0.9≤w≤1.0, and M¹ is one or more elements selected from Al, B, Ba, Ca, Ce, Co, Cr, Cu, Fe, Mg, Mo, Nb, Si, Sn, Sr, Ti, V, W, Y, Zn, and Zr.
